(19) **Europäisches Patentamt / European Patent Office / Office européen des brevets**

(11) **EP 2 240 291 B1**

(12) **FASCICULE DE BREVET EUROPEEN**

(45) Date de publication et mention
de la délivrance du brevet:
**06.09.2017 Bulletin 2017/36**

(21) Numéro de dépôt: **09703454.0**

(22) Date de dépôt: **08.01.2009**

(51) Int Cl.:
**B23K 1/08** *(2006.01)* **B23K 3/06** *(2006.01)*

(86) Numéro de dépôt international:
**PCT/FR2009/050019**

(87) Numéro de publication internationale:
**WO 2009/092937 (30.07.2009 Gazette 2009/31)**

(54) **DISPOSITIF D'ALIMENTATION EN GAZ D'UNE MACHINE DE BRASAGE OU ETAMAGE A LA VAGUE**

VORRICHTUNG ZUR GASZUFUHR FÜR EINE WELLENLÖT- ODER VERZINNUNGSMASCHINE

DEVICE FOR FEEDING GAS TO A WAVE BRAZING OR TINNING MACHINE

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **10.01.2008 FR 0850122**

(43) Date de publication de la demande:
**20.10.2010 Bulletin 2010/42**

(73) Titulaire: **L'Air Liquide Société Anonyme pour l'Etude et
l'Exploitation des Procédés Georges Claude
75007 Paris (FR)**

(72) Inventeurs:
• **LETURMY, Marc
F-78350 Les Loges En Josas (FR)**

• **POIRIER, Alban
F-78150 Le Chesnay (FR)**

(74) Mandataire: **Mellul-Bendelac, Sylvie Lisette et al
L'Air Liquide
Direction des Services
De la Propriété Intellectuelle
75, Quai d'Orsay
75321 Paris Cedex 07 (FR)**

(56) Documents cités:
**US-A- 5 520 320 US-A- 5 769 305**

• **E.SHASHI MENON: "Gas Pipeline hydraulics." 2005, CRC PRESS , BOCA RATON , XP002498355 pages 43-45**

**Description**

La présente invention concerne un dispositif d'alimentation en gaz inerte d'une machine de brasage ou étamage à la vague.

Ces machines de brasage ou d'étamage à la vague sont notamment utilisées pour le brasage de composants électroniques sur un support tel qu'un circuit électronique, ou encore pour l'étamage de terminaisons de composants électroniques. Le document US 5,769,305 révèle un dispositif d'alimentation en gaz d'une machine de brasage à la vague avec un ensemble de canalisations immergées dans le bain de soudure. La conception des machines de brasage à la vague est telle que les circuits à braser ou les pièces à étamer sont amenés en contact avec une ou plusieurs vagues de soudure liquide obtenues par pompage d'un bain de soudure contenu dans un bac au travers d'une buse.

Au préalable, les pièces, ont généralement été fluxées dans une zone amont de la machine, de façon principalement à désoxyder les surfaces métalliques pour faciliter leur mouillage ultérieur par la soudure, l'opération de fluxage étant suivie d'une opération de préchauffage qui est pratiquée tant pour activer les flux précédemment déposés sur le circuit que pour préchauffer les circuits et les composants avant leur arrivée dans la zone chaude de brasage.

La configuration géométrique de la buse détermine la forme de vague de soudure obtenue. Les machines de brasage à la vague comportent le plus communément deux vagues, une première vague dite « turbulente » et une seconde vague dite « laminaire », ce second type de vague offrant une surface supérieure plane relativement étendue.

En l'absence de pièces à braser ou étamer dans la machine, la soudure liquide s'écoule, au niveau de cette vague laminaire, à très faible vitesse vers l'amont de la machine. Lors de l'arrivée d'une pièce au contact de la vague laminaire, on assiste à une inversion partielle de l'écoulement de l'alliage, une partie de cet alliage s'écoulant vers l'aval de la machine.

Les machines sont alors souvent munies d'un système que l'on peut qualifier de déversoir, dont la hauteur permet de régler le débit d'écoulement de la soudure vers l'aval. Ce système de déversoir peut tout simplement être constitué d'une plaque métallique, ou encore d'une goulotte de guidage de la retombée de la soudure vers le bain environnant.

Il est à noter que le débit et la direction de l'écoulement de l'alliage au niveau de cette vague laminaire ont une influence déterminante sur la qualité du brasage obtenu.

Il faut encore noter que certains utilisateurs, pour s'adapter aux caractéristiques très spécifiques de leur production, limitent considérablement le phénomène d'écoulement aval de la soudure, préférant mettre en place un débordement aval très faible voire quasiment nul de la soudure.

Les machines de brasage ou d'étamage à la vague sont traditionnellement ouvertes à l'atmosphère d'air ambiant. Parmi les problèmes que rencontrent les utilisateurs de telles machines, on peut citer la formation de couches d'oxyde, appelées scories, à la surface du bain de soudure du fait de son exposition à l'air, entraînant une perte de soudure non négligeable et la nécessité de régulièrement nettoyer le bain. A titre indicatif, une machine de taille moyenne peut donner lieu à la formation de plus d'un kilogramme de scorie par heure de fonctionnement.

Si l'on considère maintenant le cas spécifique de la vague laminaire, on comprend aisément qu'un débordement aval nul ou trop faible de la soudure va présenter un inconvénient majeur, par le fait que les scories se formant en permanence sur la surface plane de la vague ne peuvent efficacement s'évacuer, et se déposent alors sur la pièce, entachant de façon significative la qualité de brasage ou étamage obtenue.

Le phénomène de scories décrit ici dans le cas de la surface plane d'une vague laminaire d'une machine de brasage à la vague existe également dans le cas de la surface plane d'un bain mort (bain liquide stagnant).

Différentes solutions techniques ont jusqu'ici été proposées pour tenter de protéger le bain de soudure des phénomènes d'oxydation par l'air environnant. Ces solutions peuvent être classées en trois catégories :

　　a) Une première catégorie de solution consiste dans la mise en place d'une atmosphère de protection confinée, au moins au dessus du bain de soudure, mais également parfois dans le reste de la machine. Il existe actuellement des machines entièrement inertées, conçues dès le départ comme un tunnel étanche. Le document US-5 161 727 décrit un système de capotages permettant de mettre en place sur des machines existantes classiques ouvertes à l'air ambiant une couverture d'azote au moins au niveau du bain de soudure.

　　b) Une seconde catégorie de solutions utilise la mise en place d'atmosphères de protection non confinées, via des injecteurs localisés à proximité des vagues de soudure, sans fermeture de l'espace situé au-dessus des vagues. On peut citer dans cette seconde catégorie les dispositifs rapportés dans le document WO 93/11653.

　　c) La troisième catégorie de solutions au problème de la formation des scories met en oeuvre l'utilisation, à la surface de la vague laminaire, d'une pellicule d'huile à fort pouvoir couvrant.

Les systèmes de protection à l'huile présentent les inconvénients classiques de l'utilisation d'huile (notamment en présence d'une source de température), qui sont en particulier la présence de dépôts d'huile sur la carte nécessitant la réalisation d'un nettoyage souvent difficile et imparfait, la nécessité de réaliser fréquemment des périodes de maintenance de la machine du fait de l'accumulation d'huile dans le bain de soudure, ou encore les émanations de vapeurs d'huile qui représentent incontestablement une nuisance pour l'environnement, qu'il soit matériel ou humain.

De nouvelles réglementations en matière d'environnement, dont la directive Européenne 2002/95/CE du 27 Janvier 2003 « relative à la limitation de l'utilisation de certaines substances dangereuses dans les équipements électriques et électroniques » interdisent, entre autre, l'utilisation de plomb dans les alliages de soudure.

Les alliages de soudure traditionnels à base de plomb ont des températures de fusion plus basses que les alliages de substitution. Par exemple, l'alliage traditionnel étain plomb Sn63-Pb37 a une température de fusion d'environ 183°C alors que l'alliage Sn Ag3 Cu0,5 (étain argent cuivre) a un point de fusion d'environ 217°C.

L'utilisation de ces nouveaux alliages nécessite de modifier l'ensemble du procédé de brasage à la vague. Ces nouveaux alliages impliquent des contraintes et des problèmes nouveaux pour la mise en oeuvre de procédé de brasage à la vague, par exemple une température de préchauffage et de brasage plus élevées ou encore une oxydation accrue.

Le fait que les températures de préchauffage et de brasage soient supérieures pose un problème de maintient de la température du circuit lors de sa progression tout au long de la machine de brasage à la vague : notamment entre la fin du préchauffage et l'arrivée sur la première vague de brasage ainsi qu'entre les deux vagues de brasage. A ces deux points de passage du circuit, il se produit une chute de température préjudiciable à la qualité de brasage. Cette chute de température est accrue par l'injection du gaz inerte pour les machines équipées d'un système d'inertage localisé au bain de soudure. Un autre point préjudiciable au brasage concerne la sortie de la deuxième vague où la vitesse de refroidissement est accrue, entraînant un choc thermique important (pour les machines possédant une injection de gaz juste en aval de cette vague-ci).

Pour les machines ne possédant pas de système de chauffage du gaz avant injection, les utilisateurs sont contraints de compenser ces chutes de température en surchauffant les bains de soudures. Ces surchauffes sont préjudiciables au brasage et peuvent également endommager les composants électroniques.

Un but de la présente invention est de proposer une solution permettant d'adapter les machines à braser à l'utilisation des nouveaux alliages à température de fusion plus élevées.

L'invention propose ainsi un dispositif d'alimentation en gaz d'une machine de brasage ou étamage à la vague, machine apte à générer au moins une vague de soudure, comprenant :

- une canalisation d'entrée de gaz,
- un ensemble de N canalisations secondaires immergées dans le bain de soudure de la machine de brasage ou d'étamage et ,

- une canalisation d'injection alimentant au moins un moyen d'injection du gaz au voisinage de ladite au moins une vague,

chaque canalisation secondaire ayant son extrémité d'entrée liée à la canalisation d'entrée et son extrémité de sortie liée à la canalisation d'injection, se caractérisant en ce que le nombre N de canalisations secondaires est supérieur ou égal à 1 et en ce que le diamètre intérieur d des canalisations secondaires et le débit de gaz $Q_0$ dans la canalisation d'entrée sont choisis tel que l'écoulement du gaz à l'intérieur des canalisations secondaires soit en régime turbulent.

Avantageusement et de façon surprenante, l'établissement d'un régime turbulent dans la ou les canalisations secondaires permet un meilleur échange thermique entre le gaz et le bain de soudure. La longueur et le nombre de canalisations secondaires s'en trouve avantageusement réduit.

Un dispositif selon l'invention peut en outre comporter l'une ou plusieurs des caractéristiques optionnelles ci-dessous, considérées individuellement ou selon toutes les combinaisons possibles:

- le nombre N de canalisations secondaires, le débit de gaz $Q_0$ dans la canalisation d'entrée en $Nm^3.s^{-1}$ (« normaux » $m^3$ pour 0°C et 1013 mbars) et le diamètre intérieur d en mètres des canalisations secondaires vérifient la relation suivante (relation dite « de Reynolds » en sortie de canalisation secondaire) :

$$(4\rho_0\ Q_0)\ /\ (\mu_s\ \Pi\ N\ d)\ \geq\ 2500,$$

et de préférence $(4\rho_0\ Q_0)\ /\ (\mu_s\ \pi\ N\ d) \geq 4000$, avec $\rho_0$ la densité du gaz en $kg.m^{-3}$ (en conditions « normales » à 0°C et 1013 mbars) et $\mu_s$ la viscosité dynamique du gaz en Pa.s. à la sortie de la canalisation immergée ;

- le dispositif vérifie la relation « de longueur» suivante (« relation maximum de longueur ») : $\dfrac{L}{d} \leq 275$ ,

avec L la longueur en mètre d'une des canalisations secondaires.

- le dispositif vérifie la relation « de longueur» suivante (« relation minimum de longueur ») : $\dfrac{L}{d} \geq 100$ avec L la longueur en mètre d'une des canalisations secondaires.

- les canalisations secondaires présentent un diamètre intérieur inférieur ou égal à 10 mm.
- le débit de gaz $Q_0$ dans la canalisation d'entrée est inférieur ou égal à 15 $Nm^3.h^{-1}$, préférentiellement à 10 $Nm^3.h^{-1}$, et/ou supérieur ou égal à 1 $Nm^3.h^{-1}$.

Comme il apparaîtra clairement à l'homme du métier, la longueur adoptée pour les canalisations immergée sera un des paramètres influençant la température du gaz en sortie des canalisations immergées et l'écart plus ou moins grand entre la température du bain et cette température de sortie.

Comme indiqué ci-dessus on adoptera avantageusement un ratio $\dfrac{L}{d} \geq 100$, et préférentiellement $\dfrac{L}{d} \leq 275$, sachant bien entendu qu'il n'est d'aucune utilité d'augmenter indûment la longueur immergée (on ne chauffera pas davantage le gaz au-delà d'une certaine longueur immergée).

L'invention se rapporte également à une machine de brasage ou d'étamage à la vague comprenant un dispositif d'alimentation en gaz selon l'invention.

On notera que l'on pourra déterminer une estimation du débit $Q_0$ tout simplement par l'expérience (du fait de systèmes équivalents déjà réalisés, ou encore par expérimentations spécifiques pour la machine considérée) ceci selon l'objectif technique visé.

Par exemple afin d'atteindre une teneur résiduelle en oxygène au niveau du bain en deçà d'une teneur limite (on peut déterminer ce débit en dehors de la présence du système de réchauffage selon l'invention, en gardant à l'esprit le fait que l'action de chauffer le gaz dans les canalisations immergées va générer une expansion volumique, et l'on pourra donc estimer un débit plus faible qui tient compte de la température en sortie du système.

En d'autres termes la détermination du débit se fera selon l'objectif recherché : si l'objectif de l'utilisateur est avant tout de minimiser la consommation de gaz alors on s'efforcera de tenir compte de l'expansion volumique ; si l'objectif est avant tout thermique (maintient de la température de la carte entre les vagues, réduire la pente de refroidissement etc ...) alors on pourra ne pas tenir compte du phénomène d'expansion volumique.

L'invention concerne également un procédé de brasage ou d'étamage à la vague, au cours duquel une pièce à braser ou étamer est amenée en contact avec au moins une vague de soudure liquide, selon lequel on dirige un gaz sur au moins une portion de ladite au moins une vague, au moyen d'un moyen d'injection de gaz, et où le moyen d'injection de gaz est alimenté en gaz par un dispositif d'alimentation selon l'invention.

L'invention sera mieux comprise à la lecture de la description qui va suivre, donnée uniquement à titre d'exemple et faite en se référant aux dessins annexés dans lesquels:

- la figure 1 est une représentation schématique d'une structure classique de machine de brasage à la vague ;
- la figure 2 est une coupe partielle et schématique d'une structure à deux vagues, turbulente et laminaire, faisant figurer certaines positions du moyen d'injection de gaz parmi les nombreuses possibilités envisageables ;
- la figure 3 est une représentation schématique d'une vague laminaire en situation d'attente de pièces (écoulement de soudure vers l'amont) ;
- la figure 4 est une représentation schématique d'une vague laminaire en situation de brasage (avec écoulement de la soudure partiellement inversé : une partie de la soudure s'écoule vers l'aval avec déversement dans la goulotte 10);
- la figure 5 est une représentation schématique partielle d'une machine conforme à l'invention;
- la figure 6 est une vue schématique d'un dispositif d'alimentation en gaz selon l'invention.

Pour des raisons de clarté, les différents éléments représentés sur les figures ne sont pas nécessairement à l'échelle.

Au sens de l'invention, on entend par « gaz » tout type de gaz, qu'il soit neutre, comme l'azote, quel que soit son mode de production et sa pureté, ou bien actif comme par exemple des mélanges gaz neutre/gaz réducteur.

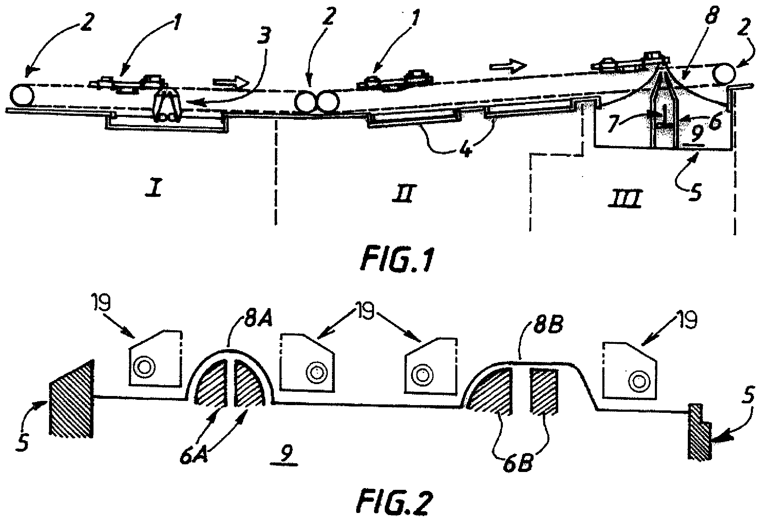

La machine de brasage à la vague schématisée en figure 1, comporte trois zones : une zone I de fluxage des pièces 1 par un système de fluxage 3, par exemple du type à spray, une zone II de préchauffage des pièces fluxées, grâce aux moyens 4, constitués par exemple de lampes infra rouge, et une zone III de brasage proprement dit où les pièces 1 rencontrent ici une vague unique de soudure 8 obtenue par pompage 7 du bain de soudure 9 au travers d'une buse de soudure 6.

Les cartes 1 sont convoyées le long des différentes zones de la machine à l'aide d'un système de convoyage 2, constitué par exemple de chaînes de convoyage « à doigts ».

La figure 2 fournit une vue schématique en coupe et partielle d'un cas où le bain de soudure 9 donne lieu à la formation d'une structure de double vague, une première vague dite turbulente 8A de structure relativement abrupte obtenue grâce à la structure de buse 6A, et une seconde vague 8B de structure laminaire, offrant une surface supérieure plane de dimension relativement étendue, obtenue elle grâce à la structure de buse 6B. On a fait figurer sur cette figure, plusieurs exemples de moyens d'injection 19 du gaz au voisinage de l'une ou l'autre des vagues 8A, 8B.

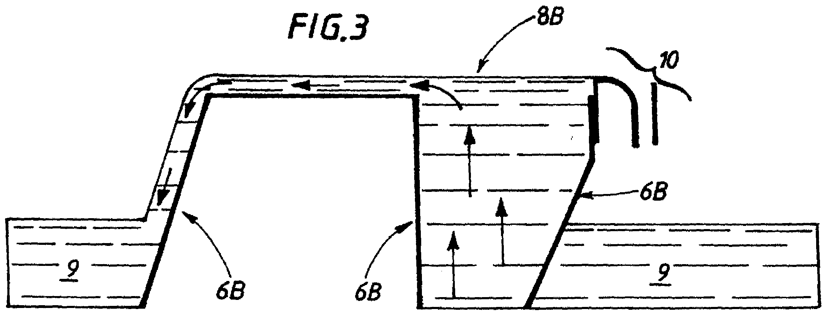

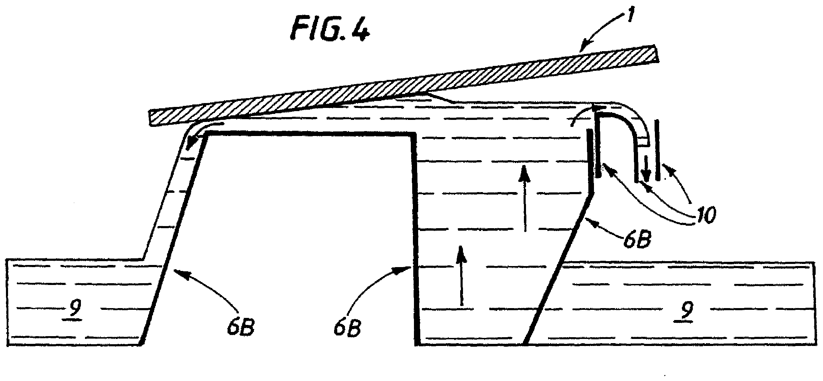

Les figures 3 et 4 illustrent l'écoulement de la soudure de la vague laminaire 8B respectivement dans une situation d'attente de pièces et en situation de brasage d'une carte 1, dans le cas d'exemple d'une machine munie d'une plaque ou goulotte de déversement.

La figure 3 illustre une situation d'attente de pièce avec écoulement de la soudure vers l'amont de la machine. La machine représentée ici inclut l'utilisation d'un système de déversoir 10, se présentant sous la forme d'une goulotte de guidage, situé juste en aval de la vague, et permettant par le réglage de sa hauteur, de régler le débit de déversement de la soudure vers l'aval ici en l'occurrence un écoulement nul ou quasiment nul.

La figure 4 illustre le phénomène de déversement partiel aval. L'arrivée de la pièce 1 sur la vague laminaire provoque une inversion partielle de l'écoulement de la soudure liquide vers l'aval de la machine, i.e vers l'avant, le débit de déversement vers l'avant étant réglable par le réglage de la hauteur du système de goulotte 10. L'utilisation d'une telle goulotte au lieu d'une simple plaque accolée à la buse 6B permet par ailleurs de mieux guider et de ramener le déversement de soudure vers le bain 9.

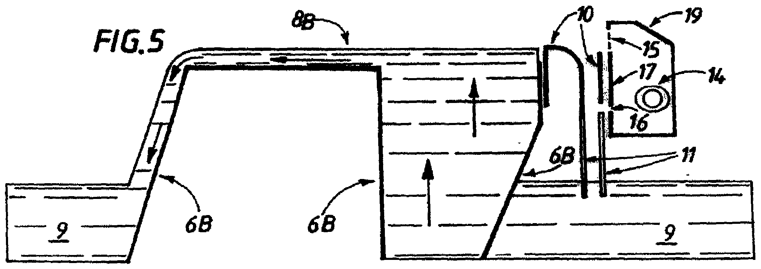

La figure 5 illustre de façon schématique et partielle un mode de réalisation d'une machine de brasage ou étamage à la vague conforme à l'invention, la représentation étant partielle car centrée sur l'arrangement vague laminaire/ injecteur/goulotte/ jupe.

La vague est ici représentée en position d'attente de pièces avec écoulement vers l'amont.

On reconnaît alors sur la figure la présence d'une jupe plongeante 11, solidaire du système de goulotte 10, en regard desquels est positionné un injecteur de gaz 12, possédant une face ou paroi 17, qui comporte deux groupes d'orifices 15 et 16.

Comme on l'aura compris, on a fait le choix de représenter sur cette figure 5 la goulotte et la jupe dont elle est solidaire par deux traits différents, ceci pour faciliter la compréhension de la figure. Selon les machines, goulotte et jupe peuvent ne pas être deux pièces disjointes rendues solidaires, on peut également utiliser dès l'origine une goulotte plongeante.

Les groupes d'orifices 15 et 16 sont respectivement positionnés de façon à pouvoir diriger un premier jet de gaz vers la surface plane de la vague laminaire 8b, et un second jet de gaz à l'intérieur de la jupe plongeante 11. La présence de la jupe plongeante et du second jet de gaz à l'intérieur de la jupe est tout particulièrement efficace pour éviter d'éventuels effets d'entraînement d'air sur la surface plane de la vague laminaire.

On remarquera la présence à l'intérieur de l'injecteur 19 d'un tube poreux 14, alimenté depuis une canalisation d'injection d'un dispositif alimentation en gaz selon l'invention, et répartissant ce gaz à l'intérieur de la chambre d'expansion que constitue le corps de l'injecteur 19.

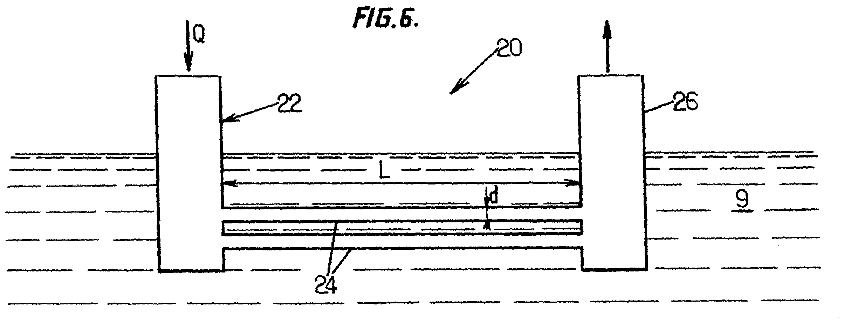

La figure 6 est une représentation schématique d'un dispositif d'alimentation en gaz selon l'invention.

Le dispositif 20 d'alimentation de gaz représenté sur la figure 6 comprend une canalisation d'entrée de gaz 22, un ensemble de deux canalisations secondaires 24 immergées dans le bain de soudure 9 de la machine de brasage ou d'étamage (en un endroit de la machine choisi et convenant compte tenu de la géométrie de la machine considérée et donc de la place disponible) et une canalisation d'injection 26 alimentant au moins un injecteur de gaz, tel que l'injecteur 14 représenté sur la figure 5 ou encore l'un ou plusieurs de injecteurs 19/14 de la figure 2.

Les deux canalisations secondaires 24 ont leurs extrémités d'entrée liées à la canalisation d'entrée 22 et leurs extrémités de sortie liées à la canalisation d'injection 26.

Le diamètre intérieur d des canalisations secondaires et le débit de gaz $Q_0$ dans la canalisation d'entrée sont choisis tel que l'écoulement du gaz à l'intérieur des canalisations secondaires soit en régime turbulent (et respectant la relation de Reynolds évoquée plus haut).

Les inventeurs ont observé que la température du gaz en sortie du dispositif d'alimentation en gaz selon l'invention dépend de paramètres tels que le régime d'écoulement du gaz dans la canalisation, le débit de gaz $Q_0$ dans la canalisation d'entrée, le diamètre des canalisations secondaires ou encore la longueur immergée des canalisations secondaires.

En pratique, le débit de gaz $Q_0$ dans la canalisation d'entrée 22 est avantageusement supérieur ou égal à 1 $Nm^3.h^{-1}$, de préférence supérieur ou égal à 5 $Nm^3.h^{-1}$ et/ou inférieur ou égal à 15 $Nm^3.h^{-1}$, de préférence inférieur ou égal à 10 $Nm^3.h^{-1}$.

Les inventeurs ont observé de manière surprenante que les échanges thermiques sont optimisés lorsque l'écoulement du gaz dans les canalisations secondaires se fait en régime turbulent (alors que l'on aurait pu penser au contraire qu'il était préférable d'adopter dans la canalisation un régime très lent prolongeant l'échange thermique).

Afin d'éviter les nuisances sonores et les pertes de charges trop importantes, la relation de vitesse précédemment énoncée est préférentiellement respectée.

Dans la pratique, étant donné les débits de gaz dans la canalisation d'entrée de gaz et la géométrie des machines de brasage à la vague, les diamètres intérieurs des canalisations secondaires sont préférentiellement inférieurs ou égaux à 10 mm.

Les canalisations secondaires immergées dans le bain de soudure sont de préférence constituées de matériaux inertes, par exemple en acier inoxydable ou en titane.

Avantageusement, le choix des matériaux permet d'une part un meilleur échange thermique et d'autre part une longévité accrue des canalisations secondaires, notamment dans le cas des alliages sans plomb qui sont corrosifs.

Les inventeurs ont observé qu'en injectant de l'azote dans un dispositif tel que représenté à la figure 6 avec un diamètre intérieur d des deux canalisations secondaires d'environ 4 mm, un débit de gaz $Q_0$ dans la canalisation d'entrée d'environ 5 $m^3.h^{-1}$ et une longueur des canalisations secondaires d'environ 1,1 m, que la température de l'azote dans la canalisation d'injection est d'environ 99% de la température du bain de soudure.

Avantageusement, plus l'intervalle de valeurs possibles pour les valeurs de débit $Q_0$ de gaz dans la canalisation d'entrée est grand, plus les performances de la machine de brasage à la vague sont indépendants de la stabilité du débit de gaz dans la canalisation d'entrée (en d'autres termes pour un débit donné $Q_0$, plusieurs couples (N,d) sont possibles il est donc avantageux de choisir le couple qui présente la plus grand plage de débits respectant les relations de Reynolds et de vitesse).

Pour chaque couple (N, d) la longueur L des canalisations secondaire est déterminée de manière à

ce que $\dfrac{L}{d} \geq 100$ et préférentiellement $\dfrac{L}{d} \leq 275$.

**Revendications**

1. Dispositif d'alimentation (20) en gaz d'une machine de brasage ou étamage à la vague, machine apte à générer au moins une vague de soudure, comprenant :

   - une canalisation d'entrée de gaz (22),
   - un ensemble de N canalisations secondaires (24) immergées dans le bain de soudure (9) de la machine de brasage ou d'étamage et,
   - une canalisation d'injection (26) alimentant au moins un moyen d'injection (14, 19) du gaz au voisinage de ladite au moins une vague (8A, 8B),
   - chaque canalisation secondaire (24) ayant son extrémité d'entrée liée à la canalisation d'entrée (22) et son extrémité de sortie liée à la canalisation d'injection (26),

   **caractérisé en ce que** le nombre N de canalisations secondaires (24) est supérieur ou égal à 1 et **en ce que** le diamètre intérieur d des canalisations secondaires (24) et le débit de gaz $Q_0$ dans la canalisation d'entrée (22) sont choisis tel que l'écoulement du gaz à l'intérieur des canalisations secondaires (24) soit en régime turbulent.

2. Dispositif selon la revendication 1, **caractérisé en ce que** le nombre N de canalisations secondaires (24), le débit de gaz $Q_0$ dans la canalisation d'entrée (22) en $Nm^3 \cdot s^{-1}$ et le diamètre intérieur d en mètre des canalisations secondaires vérifient la relation suivante (relation « de Reynolds » en sortie de canalisation secondaire) :

$$(4\rho_0 \, Q_0) \, / \, (\mu_s \, \pi \, N \, d) \geq 2500,$$

   et de préférence $(4\rho_0 \, Q_0) \, / \, (\mu_s \, \pi \, N \, d) \geq 4000$,
   avec $\rho_0$ la densité du gaz en $kg \cdot m^{-3}$ (en conditions « normales » à 0°C et 1013 mbars) et $\mu_s$ la viscosité dynamique du gaz en Pa.s. à la sortie de chaque canalisation secondaire.

3. Dispositif selon l'une quelconque des revendications précédentes **caractérisé en ce que** $\dfrac{L}{d} \geq 100$ avec L la longueur en mètres des N canalisations secondaires (24) et d leur diamètre intérieur en mètre.

4. Dispositif selon l'une quelconque des revendications précédentes **caractérisé en ce que** $\dfrac{L}{d} \leq 275$, avec L la longueur en mètres des N canalisations secondaires (24) et d leur diamètre intérieur en mètre.

5. Dispositif selon l'une quelconque des revendications précédentes **caractérisé en ce que** les canalisations secondaires (24) présentent un diamètre intérieur d inférieur ou égal à 10 mm.

6. Dispositif selon l'une quelconque des revendications précédentes **caractérisé en ce que** le débit de gaz $Q_0$ dans la canalisation d'entrée (22) est inférieur ou égal à 15 $Nm^3.h^{-1}$, et/ou supérieur ou égal à 1 $Nm^3.h^{-1}$.

7. Machine de brasage ou d'étamage à la vague comprenant un dispositif selon l'une quelconque des revendications précédentes.

8. Procédé de brasage ou d'étamage à la vague, au cours duquel une pièce à braser ou étamer (1) est amenée en contact avec au moins une vague de soudure liquide (8A, 8B), selon lequel on dirige un gaz sur au moins une portion de la vague au moyen d'un moyen d'injection de gaz (19, 14), **caractérisé en ce que** le moyen d'injection de gaz est alimenté en gaz par un dispositif d'alimentation (20) selon l'une quelconque des revendications 1 à 6.

**Patentansprüche**

1. Vorrichtung zur Versorgung (20) mit Gas einer Schwalllöt- oder Schwallverzinn-Maschine, Maschine, die imstande ist, zumindest einen Lötschwall zu generieren, umfassend:

   - eine Gaseintrittskanalisation (22),
   - eine Einheit von N Sekundärkanalisationen (24), die in das Lötbad (9) der Löt- oder Verzinn-Maschine eingetaucht sind, und
   - eine Injektionskanalisation (26), die zumindest ein Mittel zur Injektion (14, 19) des Gases in der Nähe des zumindest einen Schwalls (8A, 8B) versorgt,
   - wobei jede Sekundärkanalisation (24) ihr mit der Eintrittskanalisation (22) verbundenes Eintrittsende, und ihr mit der Injektionskanalisation (26) verbundenes Austrittsende aufweist,

**dadurch gekennzeichnet, dass** die Anzahl N an Sekundärkanalisationen (24) größer oder gleich 1 ist und dadurch, dass der Innendurchmesser d der Sekundärkanalisationen (24) und der Gasdurchsatz $Q_0$ in der Eintrittskanalisation (22) derart ausgewählt werden, dass die Strömung des Gases im Inneren der Sekundärkanalisationen (24) eine turbulente Strömung ist.

2. Vorrichtung nach Anspruch 1, **dadurch gekennzeichnet, dass** die Anzahl N an Sekundärkanalisationen (24), der Gasdurchsatz $Q_0$ in der Eintrittskanalisation (22) in $Nm^3.s^{-1}$ und der Innendurchmesser d in Meter der Sekundärkanalisationen die folgende Beziehung (<u>"Reynold'sche Zahl"</u> am Austritt der Sekundärkanalisation) bestätigt:

$$(4\rho_0\, Q_0)\, /\, (\mu_s\, \pi\, N\, d) \geq 2500,$$

und vorzugsweise $(4\rho_0\, Q_0)\, /\, (\mu_s\, n\, N\, d) \geq 4000$, mit $\rho_0$ als Dichte des Gases in $kg.m^{-3}$ (unter "normalen" Bedingungen bei 0°C und 1013 mbar) und $\mu_s$ als dynamische Viskosität des Gases in Pa.s. am Austritt einer jeden Sekundärkanalisation.

3. Vorrichtung nach einem der vorstehenden Ansprüche, **dadurch gekennzeichnet, dass** $\frac{L}{d} \geq 100$ ist, mit L als Länge in Metern der N Sekundärkanalisationen (24) und d als deren Innendurchmesser in Meter.

4. Vorrichtung nach einem der vorstehenden Ansprüche, **dadurch gekennzeichnet, dass** $\frac{L}{d} \leq 275$ ist, mit L als Länge in Metern der N Sekundärkanalisationen (24) und d als deren Innendurchmesser in Meter.

5. Vorrichtung nach einem der vorstehenden Ansprüche, **dadurch gekennzeichnet, dass** die Sekundärkanalisationen (24) einen Innendurchmesser d kleiner oder gleich 10 mm aufweisen.

6. Vorrichtung nach einem der vorstehenden Ansprüche, **dadurch gekennzeichnet, dass** der Gasdurchsatz $Q_0$ in der Eintrittskanalisation (22) kleiner oder gleich $15\ Nm^3.h^{-1}$, und/oder größer oder gleich $1\ Nm^3.h^{-1}$ ist.

7. Schwalllöt- oder Schwallverzinn-Maschine, eine Vorrichtung nach einem der vorstehenden Ansprüche umfassend.

8. Verfahren zum Schwalllöten oder Schwallverzinnen, im Laufe dessen ein zu lötendes oder zu verzinnendes Teil (1) in Kontakt mit zumindest einem flüssigen Lötschwall (8A, 8B) gebracht wird, wobei man anhand eines Gasinjektionsmittels (19, 14) ein Gas auf zumindest einen Abschnitt des Schwalls leitet, **dadurch gekennzeichnet, dass** das Gasinjektionsmittel durch eine Vorrichtung zur Versorgung (20) mit Gas nach einem der Ansprüche 1 bis 6 versorgt wird.

**Claims**

1. Device for feeding (20) gas to a wave brazing or tinning machine, said machine able to generate at least one soldering wave, comprising:

   - a gas inlet channel (22),
   - a set of N secondary channels (24) immersed in the solder bath (9) of the brazing or tinning machine and,
   - an injection channel (26) supplying at least one injection means (14, 19) for injecting the gas in the vicinity of said at least one wave (8A, 8B),
   - with each secondary channel (24) having its inlet end connected to the inlet channel (22) and its outlet end connected to the injection channel (26),

   **characterised in that** the number N of secondary channels (24) is greater than or equal to 1 and **in that** the inner diameter d of the secondary channels (24) and the gas flow rate $Q_0$ in the inlet channel (22) are chosen such that the gas flow inside the secondary channels (24) is in a turbulent mode.

2. Device according to claim 1, **characterised in that** the number N of secondary channels (24), the gas flow rate $Q_0$ in the inlet channel (22) in $Nm^3.s^{-1}$ and the inner diameter d in metres of the secondary channels satisfy the following relationship ("Reynolds" relationship at the outlet of the secondary channel):

$$(4\rho_0\, Q_0)\, /\, (\mu_s\, \pi\, N\, d) \geq 2500,$$

and preferably $(4\rho_0\, Q_0)\, /\, (\mu_s\, \pi\, N\, d) \geq 4000$, with $\rho_0$ the density of the gas in $kg.m^{-3}$ (in "normal" conditions at 0°C and 1013 mbars) and $\mu_s$ the dynamic viscosity of the gas in Pa.s. at the outlet of each secondary channel.

3. Device as claimed in any preceding claim **charac-**

**terised in that** $\frac{L}{d} \geq 100$ with L the length in metres of the N secondary channels (24) and d their inner diameter in metres.

4. Device as claimed in any preceding claim **characterised in that** $\frac{L}{d} \leq 275,$ with L the length in metres of the N secondary channels (24) and d their inner diameter in metres.

5. Device as claimed in any preceding claim **characterised in that** the secondary channels (24) have an inner diameter d less than or equal to 10 mm.

6. Device as claimed in any preceding claim **characterised in that** the gas flow rate $Q_0$ in the inlet channel (22) is less than or equal to 15 $Nm^3.h^{-1}$, and/ or greater than or equal to 1 $Nm^3.h^{-1}$.

7. Wave brazing or tinning machine comprising a device as claimed in any preceding claim.

8. Method for wave brazing or tinning, during which a part to be brazed or tinned (1) is brought into contact with at least one liquid soldering wave (8A, 8B), according to which a gas is directed onto at least one portion of the wave by means of a gas injection means (19, 14), **characterised in that** the gas injection means is supplied with gas by a supply device (20) according to any of claims 1 to 6.

FIG.1

FIG.2

EP 2 240 291 B1

FIG.3

## FIG.4

FIG.5

FIG.6.

**EP 2 240 291 B1**

**RÉFÉRENCES CITÉES DANS LA DESCRIPTION**

**Documents brevets cités dans la description**

- US 5769305 A
- US 5161727 A
- WO 9311653 A